(19) Europäisches Patentamt
European Patent Office
Office européen des brevets

(11) **EP 2 472 963 A1**

(12) **EUROPEAN PATENT APPLICATION**

(43) Date of publication:
**04.07.2012 Bulletin 2012/27**

(51) Int Cl.:
***H04W 52/02*** (2009.01)

(21) Application number: **11195906.0**

(22) Date of filing: **28.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.12.2010 KR 20100138598**

(71) Applicant: **Samsung Electronics Co., Ltd Gyeonggi-do (KR)**

(72) Inventors:
• **Yang, Dong Jin Gyeonggi-do (KR)**

• **Moon, Yong Woon Gyeonggi-do (KR)**
• **Chae, Hee Joon Gyeonggi-do (KR)**
• **Yeon, Ji Hyun Gyeonggi-do (KR)**

(74) Representative: **Jenkins, Richard Gavin et al Harrison Goddard Foote Saviour House 9 St Saviourgate York, Yorkshire YO1 8NQ (GB)**

(54) **Keep-alive packet transmission method and apparatus of mobile terminal**

(57) A method and an apparatus for synchronizing the keep-alive packet transmission timings of the direct push applications are provided to improve an electric current consumption characteristic. The method includes detecting a network event, synchronizing transmission timings of keep-alive packets of direct push applications with reference to an occurrence time of the network event, and transmitting the keep-alive packets of the direct push application at a synchronized transmission timing simultaneously.

FIG. 1

EP 2 472 963 A1

**Description**

**BACKGROUND OF THE INVENTION**

1. Field of the Invention:

The present invention relates to a keep-alive packet transmission method and apparatus of a mobile terminal. More particularly, the present invention relates to a method and an apparatus for synchronizing the keep-alive packet transmission timings of the direct push applications to improve electric current consumption characteristic of the mobile terminal.

2. Description of the Related Art:

With rapid advancement of information and semiconductor technologies, there has been a phenomenal growth in the use and popularity of mobile devices. Recent mobile devices are not just basic devices that provide dedicated services but have become multifunctional devices supporting converged functions and services. A mobile communication terminal incorporates diverse supplementary functions including a Television (TV) function, (e.g., Digital Multimedia Broadcasting (DMB) and Digital Video Broadcasting (DVB)), an audio playback function (e.g., Motion Pictures Expert Group (MPEG) Audio Layer-3 (MP3)), a camera function, an Internet access function, a dictionary function, and a search function, as well as the basic voice communication and messaging functions.

More particularly, the mobile terminal equipped with the Instant Messenger (IM) and push e-mail client transmits a keep-alive packet to the server periodically to verify that the mobile terminal is still connected to the corresponding service even when it is currently not using the service. That is, in a case of the mobile terminal operating with the applications supporting the direct push feature, the individual direct push applications periodically transmit the keep-alive packet to the server to maintain the push sessions. The mobile terminal requires current whenever the keep-alive packet is transmitted such that the current consumption increases in proportion to the number of direct push applications running on the mobile terminal.

In the mobile terminal of the related art, the direct push applications transmit the keep-alive packets independently from each other. Assuming that there are two direct push applications A and B, the direct push applications A and B can have different keep-alive packet transmission intervals (e.g., HeartBeat Interval (HBI)). In this case, the direct push applications A and B transmit the keep-alive packets periodically at different HBIs. Accordingly, the total current consumption for keep-alive packet transmission of the mobile terminal becomes the sum of the currents consumed by individual direct push applications for the keep-alive packet transmission.

The control unit of the mobile terminal has to wake up whenever each direct push application attempts to transmit the keep-alive packet and thus the current consumption related to the keep-alive packet transmission increases in proportion to a number of wakeups of the control unit, resulting in degradation of the usability of the mobile terminal.

Therefore, a need exists for a method of reducing current consumption of a mobile terminal by synchronizing the HBIs of the direct push applications.

**SUMMARY OF THE INVENTION**

Aspects of the present invention are to address at least the abovementioned problems and/or disadvantages and to provide at least the advantages described below. Accordingly, an aspect of the present invention is to provide a method and an apparatus for reducing the current consumption of a mobile terminal by synchronizing the transmission timings of the keep-alive packets.

Another aspect of the present invention is to provide a method and an apparatus for reducing the current consumption of a mobile terminal by synchronizing transmission intervals of the keep-alive packets issued by the direct push applications running on the mobile terminal.

Another aspect of the present invention is to provide a method and an apparatus for enhancing current consumption characteristics of the mobile terminal by synchronizing the keep-alive packet transmission intervals of the direct push applications running on the mobile terminal.

Still another aspect of the present invention is to provide a method and an apparatus for improving the usability of the mobile terminal with the expansion of battery usage time by improving the current consumption characteristic related to the keep-alive packet transmissions of the direct push applications operating on the mobile terminal.

In accordance with an aspect of the present invention, a method of reducing current consumption of a mobile terminal is provided. The method includes detecting a network event, synchronizing transmission timings of keep-alive packets of direct push applications with reference to an occurrence time of the network event, and transmitting the keep-alive packets of the direct push application at a synchronized transmission timing simultaneously.

Synchronizing transmission timings of keep-alive packets of direct push applications may include determining keep-alive packet transmission intervals of individual direct push applications, selecting the direct push applications of which keep-alive packet transmission intervals fulfill a predefined condition, and shifting the transmission timings of the selected direct push application to the occurrence time of the network event.

Synchronizing keep-alive packet transmission timings may include determining a threshold value T, which is the difference between the occurrence of the network event and a keep-alive packet transmission time of each of the direct push applications, and synchronizing the keep-alive packet transmission timing of the direct push application of which T is less than the HeartBeat Interval (HBI) of the corresponding application.

Synchronizing keep-alive packet transmission timings includes synchronizing the keep-alive packet transmission timings of the direct push applications of which threshold value T is less than $\dfrac{HBI}{2}$.

In accordance with another aspect of the present invention, a computer-readable storage medium stores the above method in the form of programs executable in a processor.

In accordance with another aspect of the present invention, a mobile terminal is provided. The mobile terminal includes a communication module for maintaining a push session with at least one server and for transmitting keep-alive packets of direct push applications to the at least one server, a storage unit for storing the direct push applications and HBI information indicating transmission intervals of the direct push applications, and a control unit for synchronizing transmission timings of the keep-alive packets of the direct push applications with reference to an occurrence time of a network event.

Other aspects, advantages, and salient features of the invention will become apparent to those skilled in the art from the following detailed description, which, taken in conjunction with the annexed drawings, discloses exemplary embodiments of the invention.

## BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a signaling diagram illustrating signaling associated with a keep-alive packet transmission of direct push applications running on a mobile terminal according to an exemplary embodiment of the present invention;

FIG. 2 is a block diagram illustrating a configuration of a mobile terminal according to an exemplary embodiment of the present invention;

FIG. 3 is a diagram illustrating a principle of synchronization of keep-alive packet transmission timings of the direct push applications running on the mobile terminal according to an exemplary embodiment of the present invention;

FIG. 4 is a flowchart illustrating a method of transmitting keep-alive packets of direct push applications running on a mobile terminal according to an exemplary embodiment of the present invention; and

FIG. 5 illustrates simulation results of current consumption for keep-alive packet transmission of a mobile terminal according to an exemplary embodiment of the present invention.

Throughout the drawings, it should be noted that like reference numbers are used to depict the same or similar elements, features, and structures.

## DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, description of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Exemplary embodiments of the present invention propose a method and an apparatus for reducing current consumption of a mobile terminal by synchronizing the transmission interval of keep-alive packets generated by a plurality of applications running on the mobile terminal.

Exemplary configurations of a mobile terminal and method of controlling the operations of the mobile terminal are described hereinafter with reference to the accompanying drawings. However, it should be noted that exemplary embodiments of the present invention are not limited to the descriptions made herein but can be implemented in various other embodiments.

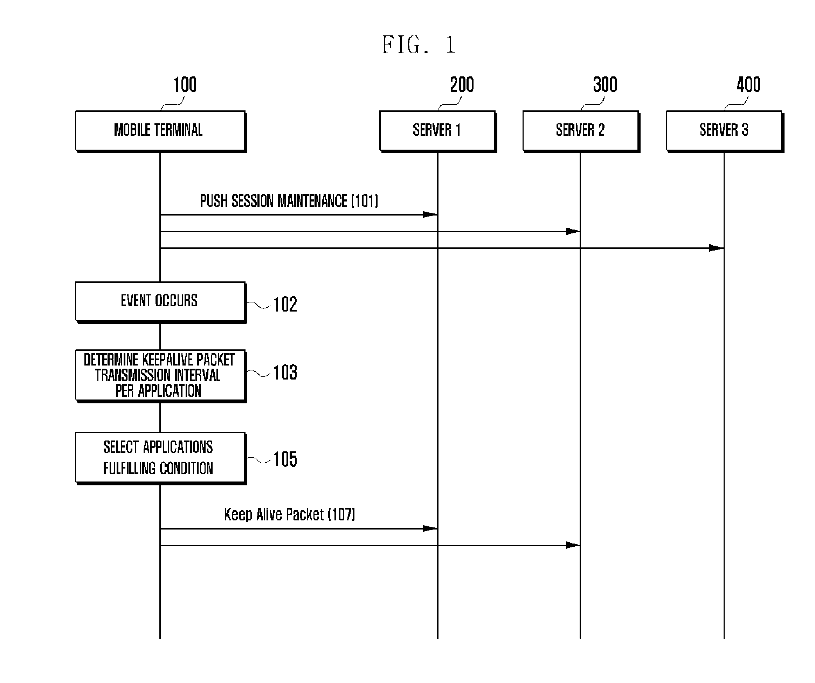

FIGs. 1 through 5, described below, and the various exemplary embodiments of the present invention provided are by way of illustration only and should not be construed in any way that would limit the scope of the present invention. Those skilled in the art will understand that the principles of the present disclosure may be implemented in any suitably arranged communications system. The terms used to describe various exemplary embodiments of the present invention provided to merely aid the understanding of the description, and that their use and definitions in no way limit the scope of the invention. Terms first, second, and the like are used to differentiate between objects having the same terminology and are in no way intended to represent a chronological order, unless where explicitly state otherwise. A set is defined as a non-empty set including at least one element.

FIG. 1 a signaling diagram illustrating signaling associated with a keep-alive packet transmission of direct push applications running on a mobile terminal according to an exemplary embodiment of the present invention.

Referring to FIG. 1, mobile terminal 100 may maintain push sessions with a server 1 200, a server 2 300, and a server 3 400, respectively at step 101.

For example, three applications, i.e., application A, application B, and application C, are running on the mobile terminal 100, and the application A maintains a push session with the server 1 200, the application B with the server 2 300, and the application C with the server 3 400.

Here, the description is directed to the case where the three applications maintain their respective push sessions in association with the services provided by the server 1 200, the server 2 300, and the server 3 400. According to an exemplary embodiment of the present invention, the direct push applications can maintain the push session with at least one server according to the type of the service provided by the server. For example, the applications A and B can maintain the push session with the same server (e.g., server 1 200) simultaneously, while the application C maintains the push session with another server (e.g., server 2 300).

While maintaining the push sessions with the servers, the mobile terminal 100 can detect if a network event occurs at step 102.

In an exemplary embodiment of the present invention, the network event is an event for waking up the control unit of the mobile terminal to process the operation related with the communication of the mobile terminal 100. More particularly, the network event may include a communication event and an application activation event. The communication event may include an incoming call event, an outgoing call event, an incoming email event, an outgoing email event, incoming and outgoing messaging events (e.g., Short Messaging Service (SMS), Multimedia Messaging Service (MMS), Social Networking Service (SNS), instant messenger service messages, and the like), and an Internet browsing function execution event. The application activation event is the event activating a specific application for transmitting a keep-alive packet at a predefined keep-alive packet transmission interval.

Thereafter, the mobile terminal 100 determines the keep-alive packet transmission intervals of the applications (i.e., the applications A, B, and C) supporting the direct push function upon detection of the network event at step 103.

In an exemplary embodiment of the present invention, the description is made under the assumption that the keep-alive packet transmission interval is the HeartBeat Interval (HBI). In an exemplary embodiment of the present invention, the HBIs of the applications can be set to the same value or different values. The mobile terminal 100 can determine the HBIs of the individual applications supporting the direct push feature by retrieving the previously stored HBI information.

Thereafter, the mobile terminal 100 retrieves the applications for fulfilling the preset conditions by determining the HBIs of the individual applications at step 105.

For example, the mobile terminal 100 can retrieve the application having a value (hereinafter, referred to as 'threshold value' or 'T') obtained by subtracting the network event occurrence time from the keep-alive packet transmission time, which is less than the HBIs of other applications. More particularly, the application fulfilling the condition where the threshold value T is less than $\dfrac{HBI}{2}$, i.e., $T < \dfrac{HBI}{2}$, is selected. Although the description is directed to the case where T is less than $\dfrac{HBI}{2}$ to shorten the keep-alive packet transmission interval, the threshold value T can be replaced by a value that can minimize the number of wakeups of the control unit.

Finally, the mobile terminal 100 transmits the keep-alive packets of the retrieved applications to the corresponding servers at the synchronized timing at step 107.

For example, assuming that the applications A, B, and C have different keep-alive packet transmission intervals and the applications A and B fulfill the condition, the mobile terminal 100 maintains the push sessions of the applications A and B and transmits the keep-alive packets to the corresponding servers 200 and 300 simultaneously at the network event occurrence time.

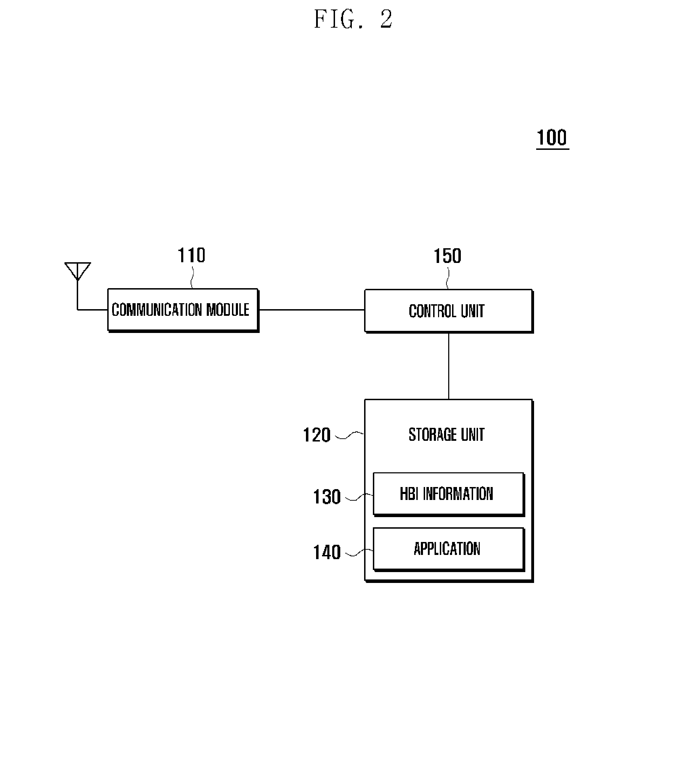

FIG. 2 is a block diagram illustrating a configuration of a mobile terminal according to an exemplary embodiment of the present invention.

Referring to FIG. 2, the mobile terminal 100 includes a communication module 110, a storage unit 120, and a control unit 150. Although not depicted herein, the mobile terminal 100 can further include at least one of an audio processing unit including a microphone and a speaker, a digital broadcast module for playback of digital broadcast, such as Digital Multimedia Broadcasting (DMB) and Digital Video Broadcasting (DVB), a camera module for taking still/motion pictures, a Bluetooth module for executing Bluetooth communication, an internet access module for supporting internet access, a touchpad for supporting touch-based input, an input unit for receiving physical key input, a display unit for displaying video data associated with the operations of the mobile terminal 100, a battery for supplying power to the internal function blocks, and the like.

The communication module 110 is a unit for supporting cellular communication service and Internet Protocol (IP) communication service, e.g., Wireless-Fidelity (Wi-Fi) service on the Wireless Local Area Network (WLAN). The communication module 110 is capable of processing data communication with a specific server. More particularly, the communication module 110 can establish and maintain push sessions with at least one server and transmit the keep-alive packets of the direct push applications to the at least one server under the control of the control unit 150.

The storage unit 120 stores various programs and data executed and processed in the mobile terminal and includes at least one non-volatile and volatile memories. The non-volatile memory can be any of a Read Only Memory (ROM) and flash memory, and the volatile memory can be a Random Access Memory (RAM). The storage unit 120 may temporarily or permanently store the Operating System (OS) of the mobile terminal 100, programs related to the synchronization of the transmission timings of keep-alive packets of the individual direct push applications and data.

In an exemplary embodiment of the present invention, the storage unit 120 can store HBI information 130 indicating the transmission interval of the keep-alive packet and at least one application 140. The HBI information may include the HBIs of individual direct push applications, and the at least one application 140 can include a plurality of direct push applications.

The control unit 150 controls overall operations of the mobile terminal 100. More particularly, the control unit 150 can control the operations related to the keep-alive packet transmissions and synchronization of the keep-alive packet transmission timings. If a network event is detected, the control unit 150 performs synchronization of the keep-alive packet transmission timings of the direct push applications and transmits the keep-alive packets of the applications synchronized in transmission timing.

As aforementioned, the network event includes the communication event related to the data communication with an external entity (e.g., a network or a server linked to the mobile terminal via a communication channel) and an application activation event for activating a direct push application for transmitting the keep-alive packet at the application's HBI. The control operations of the control unit 150 are described later in association with the operations of the mobile terminal 100 and control method thereof.

In addition, the control unit 150 can control the operations related to the typical functions of the mobile terminal. For example, the control unit 150 can control the execution of a specific application and display of the data related to the specific application. The control unit 150 can also control executions of functions in response to the signal input in diverse input ways supported by the touch-sensitive input interface. The control unit 150 can also control transmission and reception of various data over wired and/or wireless channels.

Meanwhile, the configuration of the mobile terminal 100 depicted in FIG. 2 can be applied to any one of the portable devices manufactured in a bar type, a folder type, a slide type, a swing type, and a flip type. The mobile terminal 100 can be any one of the information communication device, a multimedia device and their equivalents having installed direct push applications. For example, the mobile terminal 100 can be any one of a mobile communication terminal, a tablet Personal Computer (PC), a smartphone, a Portable Multimedia Player (PMP), a digital broadcast player, a Personal Digital Assistant (PDA), and a portable game console that supports communication in compliance with one of various communication protocols.

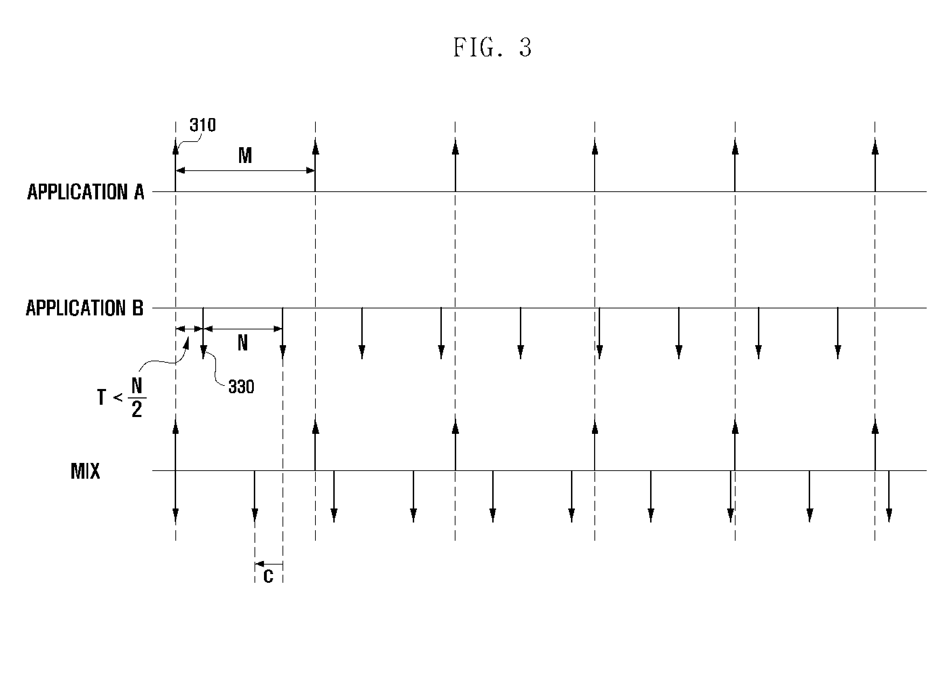

FIG. 3 is a diagram illustrating a principle of synchronization of keep-alive packet transmission timings of the direct push applications running on the mobile terminal according to an exemplary embodiment of the present invention.

FIG. 3 is depicted under the assumption that two direct push applications (i.e., applications A and B) having the respective keep-alive packet transmission intervals of M and N in the mobile terminal 100. For example, the keep-alive packet transmission interval of the application A is 5 minutes (M=5), and the keep-alive packet transmission interval of the application B is 3 minutes (N=3). In FIG. 3, MIX denotes transmission of the keep-alive packets of the applications A and B of which transmission timings are synchronized according to an exemplary embodiment of the present invention.

Referring to FIG. 3, reference number 310 denotes the keep-alive packet transmission timing according to the HBI (HBI=M) of the application A, and reference number 330 denotes the keep-alive packet transmission timing according to the HBI (HBI=N) of the application B.

A description is made of the normal operations of applications for keep-alive packet transmissions. The application A transmits its keep-alive packet at the timing 310 and afterward at its HBI (HBI=M). Meanwhile, the application B transmits its keep-alive packet at the timing 330 and afterward at its HBI (HBI=N).

The control unit 150 of the mobile terminal 100 wakes up at the time point 310 to control the keep-alive packet transmission of the application A and enters the idle mode. Afterward, the control unit 150 of the mobile terminal 100 wakes up again at the time point 330 to control the keep-alive packet transmission of the application B and enters the idle mode. In such a case, the control unit 150 of the mobile terminal 100 has to wake up at all the keep-alive packet transmission timings of both the applications A and B, and the control unit 150 has to wake up more frequently as the number of direct push applications running on the mobile terminal 100 increases. This means that the current consumption caused by the wakeup of the control unit 150 for the keep-alive packet transmission increases in proportion to the number of direct push applications running on the mobile terminal.

In a case where the keep-alive packets of the direct push applications are transmitted as synchronized in transmission timings according to an exemplary embodiment of the present invention, the mobile terminal 100 transmits the keep-alive packets of the direct push applications for fulfilling an HBI condition simultaneously. In FIG. 3, it is assumed that a network event for activating the application A to transmit the keep-alive packet is detected.

If the application A is activated to transmit the keep-alive packet at the timing 310, the mobile terminal 100 determines the HBIs of other direct push applications (here, the application B). Assuming that the application B is activated at the timing 330 to transmit the keep-alive packet, the mobile terminal 100 compares the threshold value T, i.e., the difference between the keep-alive packet transmission timings of the applications A and B with the HBI of the application B (HBI=N), and determines whether the threshold T is less than $\dfrac{HBI}{2}$.

If this condition is fulfilled, the mobile terminal 100 can shift the keep-alive packet transmission timing of the application B by as much as C so as to be equal to the keep-alive packet transmission timing of the application A. At this time, the mobile terminal 100 brings back the keep-alive packet transmission timing by as much as C.

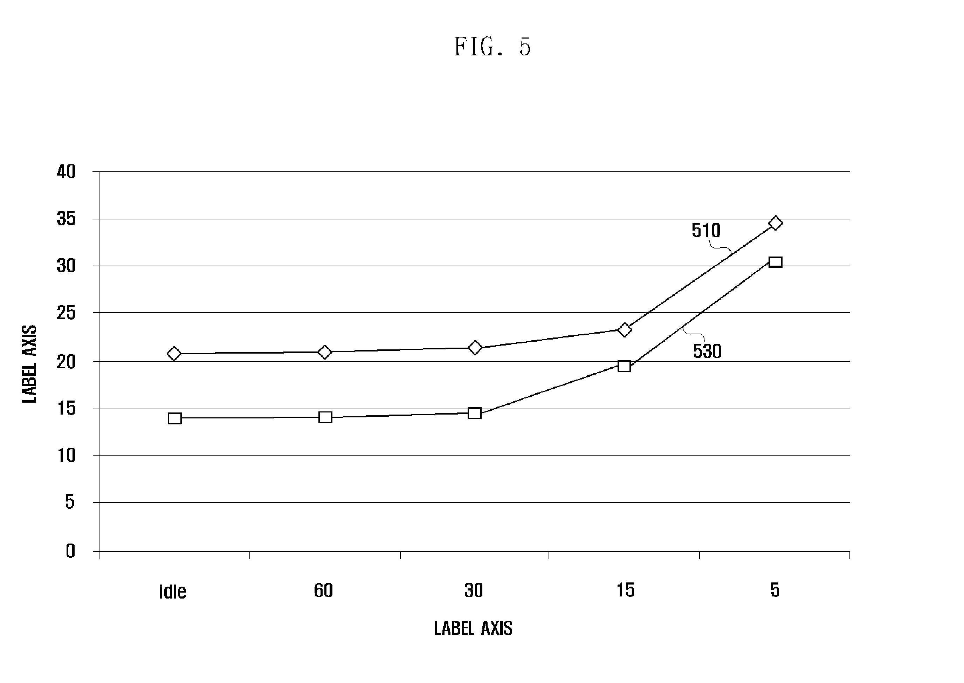

Accordingly, the keep-alive packet of the application B is transmitted along with the keep-alive packet of the application A at the timing 310. That is, the keep-alive packet transmission timings of the applications A and B are synchronized with each other such that the keep-alive packets of the applications A and B are transmitted simultaneously. As a result, the number of wakeups for transmitting the keep-alive packets of the applications A and B decreases. According to exemplary embodiments of the present invention, the number of wakeups of the control unit for the keep-alive packet transmissions of the direct push applications running on the mobile terminal is minimized, resulting in reduction of current consumption. The simulation result is described later with reference to FIG. 5.

In FIG. 3, the keep-alive packet transmission timing of the application B is synchronized to that of the application A according to the event for activating the application A. In a case where the event for activating the application A occurs, the mobile terminal determines the HBIs of the applications A and B and, when the HBI of the application B fulfills a predefined condition, synchronizes the keep-alive transmission timing of the application B to that of the application A.

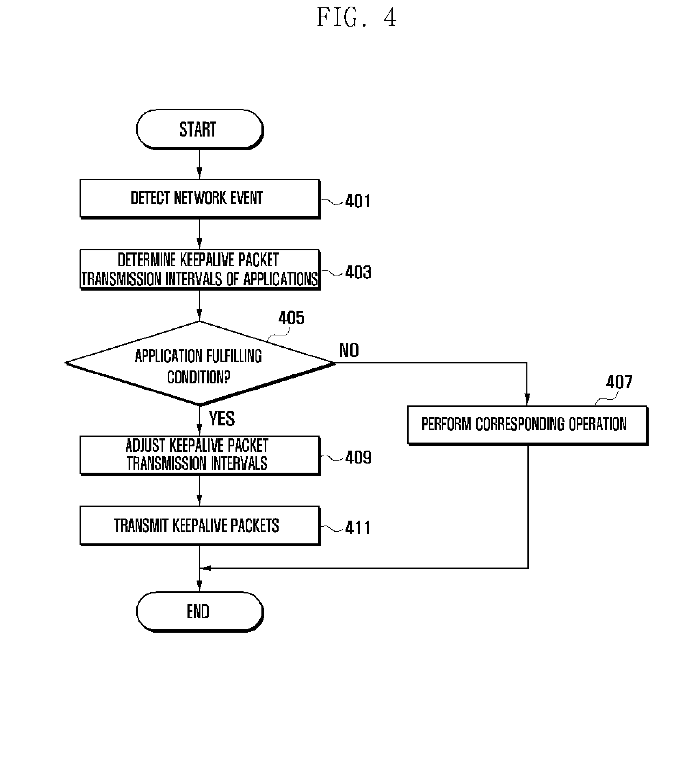

FIG. 4 is a flowchart illustrating a method of transmitting keep-alive packets of direct push applications running on a mobile terminal according to an exemplary embodiment of the present invention.

Referring to FIG. 4, a control unit 150 detects the occurrence of a network event at step 401. As aforementioned, the network event can be any of a communication event and an application activation event. The communication event may include incoming and outgoing call events, incoming and outgoing messaging events (e.g., SMS, MMS, SNS, and Instant Messenger (IM) messaging events), and internet browsing function execution event. The application activation event is the event for activating a direct push application for transmitting the keep-alive packet at HBI of the application.

Once the network event has been detected, the control unit 150 determines the transmission intervals (i.e., HBIs) of the direct push applications running on the mobile terminal at step 403. If a network event is detected, the control unit 150 parses the HBI information 130 to determine the HBIs of the direct push applications.

Thereafter, the control unit 150 determines whether there is at least one direct push application fulfilling a predefined condition at step 405. More specifically, the control unit 150 retrieves the direct push application of which the threshold value T fulfills the condition of $T < \dfrac{HBI}{2}$. Here, the threshold value T is the difference between occurrence time of an event and the keep-alive packet transmission time of the application to be compared.

If it is determined in step 405 that there is a direct push application fulfilling the condition, the control unit 150 adjusts the keep-alive packet transmission interval of the application at step 409. In contrast, if it is determined in step 405 that there is not a direct push application fulfilling the condition, the control unit 150 performs the corresponding operation at step 407. As described with reference to FIG. 3, the control unit 150 synchronizes the keep-alive packet transmission time of the application fulfilling condition to the keep-alive packet transmission time of the application for which the network event has occurred by making the keep-alive packet transmission time of the condition-fulfilling application earlier to the keep-alive packet transmission time of the event-targeted application, i.e., shifting the keep-alive packet transmission timing of the condition-fulfilling application backward in time by as much as C.

Thereafter, the control unit 150 transmits the keep-alive packet of the condition-fulfilling application along with the keep-alive packet of the network event-targeted application simultaneously at step 411. In this manner, the control unit 150 can transmit the keep-alive packets of the direct push applications fulfilling the condition to the corresponding servers simultaneously.

FIG. 5 illustrates simulation results of current consumption for keep-alive packet transmission of a mobile terminal according to an exemplary embodiment of the present invention,

Referring to FIG. 5, a comparison of current consumption by a keep-alive packet transmission method of the related art and a keep-alive packet transmission method according to an exemplary embodiment of the present invention is illustrated. It is assumed that two direct push applications (i.e., applications A and B) are running on the mobile terminal 100, and the applications A and B have the respective keep-alive transmission intervals of M (HBI=M) and N (HBI=N).

In FIG. 5, reference number 510 denotes a curve showing variation of current consumption as the transmission intervals of the keep-alive packets are shortened when the keep-alive packets of the applications A and B are transmitted without synchronization of the transmission timings, and reference number 530 denotes a curve showing variation of current consumption when the keep-alive packets of the applications A and B are transmitted simultaneously at synchronized timing according to an exemplary embodiment of the present invention (i.e., in MIX state of FIG 3). In FIG. 5, the X axis denotes the transmission interval of the keep-alive packet, and the Y axis denotes the electric current consumption. The simulation result of FIG. 5 can be summarized as shown in Table 1.

Table 1

| | Average current consumption per Tx interval | | | | |
| --- | --- | --- | --- | --- | --- |
| | 5min. | 15min. | 30min. | 60min. | Idle |
| Method of the related art | 34.46 mA | 23.25 mA | 21.33 mA | 20.91 mA | 20.73 mA |
| Proposed method | 30.42 mA | 19.50 mA | 14.32 mA | 14.04 mA | 13.99 mA |

As shown in FIG. 5 and Table 1, the keep-alive packet transmission method according to an exemplary embodiment of the present invention is capable of reducing the current required for transmitting the keep-alive packet transmission. When the applications A and B transmit the keep-alive packets at the interval of 5 minutes respectively, the current consumption is 30.42mA in an exemplary implementation, which is reduced as compared to 34.46mA in the method of the related art. When the applications A and B transmit the keep-alive packets at the interval of 15 minutes respectively, the current consumption is 19.50mA in an exemplary implementation, which is reduced as compared to 23.25mA in the method of the related art. When the applications A and B transmit the keep-alive packets at the interval of 30 minutes respectively, the current consumption is 14.32mA in an exemplary implementation, which is reduced as compared to 21.33mA in the method of the related art. When the applications A and B transmit the keep-alive packets at the interval of 60 minutes respectively, the current consumption is 14.04mA in an exemplary implementation, which is reduced as compared to 20.91mA in the method of the related art. In addition, even when the applications A and B are in an idle state, the current consumption is 13.99mA in an exemplary implementation, which is reduced as compared to 20.73mA in the method of the related art.

This means that the mobile terminal 100 can save the standby current consumption up to about 44%.

As described above, the keep-alive packet transmission method and apparatus of exemplary embodiments of the present invention is capable of reducing the wakeup times of the control unit of a mobile terminal for transmitting the keep-alive packets by synchronizing keep-alive packet transmission timings of the direct push applications running on the mobile terminal, resulting in reduction of current consumption related to the keep-alive packet transmission.

In addition, the keep-alive packet transmission method and apparatus of exemplary embodiments of the present invention is capable of minimizing a number of the keep-alive packet transmission times to improve the current consumption characteristic of the mobile terminal, resulting in extension of usage time of the mobile terminal. The keep-alive packet transmission method and apparatus can be applied to all the types of devices operating with multiple direct push applications. The keep-alive packet transmission method and apparatus of exemplary embodiments of the present invention is capable of preparing optimized environment for enhancing the current consumption characteristic related to operations of the direct push applications running on the mobile terminal, resulting in improvement of usability and competitiveness of the mobile terminal.

The keep-alive packet transmission method of exemplary embodiments of the present invention can be recorded in a computer-readable storage medium in the form of program commands executed by means of various types of computer means. The computer-readable storage medium can store the program commands, data files, and data structures independently or in the form of their combination. The program commands recorded in the storage media can be the ones designed and configured for dedicated use in exemplary embodiments of the present invention or the ones well-known to those in the computer software field.

The computer-readable media may include program commands, data files, data structures, etc. separately or compositely. The program commands recorded in the media may be particularly designed and configured for the present invention, or known and used by those skilled in the computer software field. The computer-readable media may be magnetic media, such as a hard disk, a floppy disk and a magnetic tape, an optical media, such as a Compact Disk Read-Only Memory (CD-ROM) and a Digital Versatile Disk (DVD), a magneto-optical media, such as a floppy disk, and hardware devices, such as a ROM, a Random-Access Memory (RAM), a flash memory, etc., particularly implemented to store and execute program commands. The program commands may be machine language codes produced by a compiler and high-level language codes that can be executed by computers using an interpreter. In order to perform the operations of exemplary embodiments of the present invention, the hardware devices may be implemented to operate as at least one software module, and vice versa.

While the invention has been shown and described with reference to certain exemplary embodiments thereof, it will be understood by those skilled in the art that various changes in form and details may be made therein without departing from the spirit and scope of the invention as defined in the appended claims and their equivalents.

**Claims**

1. A keep-alive packet transmission method, the method comprising:

   detecting a network event;
   synchronizing transmission timings of keep-alive packets of direct push applications with reference to an occurrence time of the network event; and
   transmitting the keep-alive packets of the direct push application at a synchronized transmission timing simultaneously.

2. The method of claim 1, wherein the synchronizing comprises:

   determining keep-alive packet transmission intervals of individual direct push applications;
   selecting the direct push applications of which keep-alive packet transmission intervals fulfill a predefined condition; and
   shifting the transmission timings of the selected direct push application to the occurrence time of the network event.

3. The method of claim 2, wherein the network event comprises waking up a control unit of the mobile terminal to process a communication-related operation.

4. The method of claim 3, wherein the network event comprises at least one of a communication event including an incoming call event, an outgoing call event, an incoming email event, an outgoing email event, an incoming message event, an outgoing message event, and an Internet browsing function execution event, and an application activation event for activating a specific direct push application to transmit the keep-alive packet at a transmission interval of the application.

5. The method of claim 2, wherein the direct push applications are configured with respective HeartBeat Intervals (HBIs) for transmitting the keep-alive packets.

**6.** The method of claim 5, wherein the determining of the keep-alive packet transmission intervals comprises:

retrieving HBI information of each direct push application; and
identifying HBIs of the individual direct push applications.

**7.** The method of claim 6, wherein the retrieving of the HBI information comprises selecting direct push applications of which a threshold value T, which is the difference between the occurrence time of the network event and a keep-alive packet transmission time of each of the direct push applications, is less than the HBI of the corresponding direct push application.

**8.** The method of claim 7, wherein the retrieving of the HBI information comprises selecting the direct push application of which the threshold value T is less than $\dfrac{HBI}{2}$.

**9.** The method of claim 2, further comprising maintaining push sessions of the direct push applications with corresponding servers.

**10.** A mobile terminal comprising:

a communication module for maintaining a push session with at least one server and for transmitting keep-alive packets of direct push applications to the at least one server;
a storage unit for storing the direct push applications and HeartBeat Interval (HBI) information indicating transmission intervals of the direct push applications; and
a control unit for synchronizing transmission timings of the keep-alive packets of the direct push applications with reference to an occurrence time of a network event.

**11.** The mobile terminal of claim 10, wherein the control unit selects the direct push applications for fulfilling a predefined condition and for synchronizing keep-alive packet transmission timings of the direct push applications by shifting to the occurrence time of the network event.

**12.** The mobile terminal of claim 11, wherein the control unit determines a threshold value T, which is the difference between the occurrence time of the network event and a keep-alive packet transmission time of each of the direct push applications, and synchronizes the keep-alive packet transmission timing of the direct push application of which T is less than the HeartBeat Interval (HBI) of the corresponding application.

**13.** The mobile terminal of claim 12, wherein the network event comprises waking up the control unit of the mobile terminal to process a communication-related operation.

**14.** The mobile terminal of claim 13, wherein the network event comprises at least one of a communication event including an incoming call event, an outgoing call event, an incoming email event, an outgoing email event, an incoming message event, an outgoing message event, and an Internet browsing function execution event, and an application activation event for activating a specific direct push application to transmit the keep-alive packet at a transmission interval of the application.

**15.** The mobile terminal of claim 12, wherein the control unit synchronizes the keep-alive packet transmission timings of the direct push applications of which threshold value T is less than $\dfrac{HBI}{2}$.

# FIG. 1

FIG. 2

100

110

150

COMMUNICATION MODULE

CONTROL UNIT

120

STORAGE UNIT

130

HBI INFORMATION

140

APPLICATION

FIG. 3

EP 2 472 963 A1

EP 2 472 963 A1

FIG. 4

START

DETECT NETWORK EVENT ~401

DETERMINE KEEPALIVE PACKET
TRANSMISSION INTERVALS OF APPLICATIONS ~403

405
APPLICATION FULFILLING CONDITION? — NO → PERFORM CORRESPONDING OPERATION ~407

YES

ADJUST KEEPALIVE PACKET
TRANSMISSION INTERVALS ~409

TRANSMIT KEEPALIVE PACKETS ~411

END

FIG. 5

EP 2 472 963 A1

Europäisches
Patentamt

European
Patent Office

Office européen
des brevets

**EUROPEAN SEARCH REPORT**

Application Number

EP 11 19 5906

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/053522 A1 (TELIASONERA AB [SE]; HUOVIALA RAUNO [FI]; PIHLAJAMAEKI ANTTI [FI]) 30 April 2009 (2009-04-30)<br>* figure 4 *<br>* page 7 - page 8 *<br>----- | 1-15 | INV.<br>H04W52/02 |
| A | US 2010/279745 A1 (WESTCOTT BRYAN LLOYD [US] ET AL) 4 November 2010 (2010-11-04)<br>* paragraph [0008] *<br>----- | 1-15 | |
| | | | **TECHNICAL FIELDS SEARCHED (IPC)**<br><br>H04W |

The present search report has been drawn up for all claims

| Place of search | Date of completion of the search | Examiner |
|---|---|---|
| The Hague | 27 April 2012 | Suciu, Radu |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 11 19 5906

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2012

| Patent document cited in search report | | Publication date | Patent family member(s) | | | Publication date |
|---|---|---|---|---|---|---|
| WO 2009053522 | A1 | 30-04-2009 | AT | 505926 | T | 15-04-2011 |
| | | | DK | 2206390 | T3 | 18-07-2011 |
| | | | EP | 2206390 | A1 | 14-07-2010 |
| | | | ES | 2362163 | T3 | 29-06-2011 |
| | | | FI | 120179 | B1 | 15-07-2009 |
| | | | US | 2010260148 | A1 | 14-10-2010 |
| | | | WO | 2009053522 | A1 | 30-04-2009 |
| US 2010279745 | A1 | 04-11-2010 | NONE | | | |

EPO FORM P0459

For more details about this annex : see Official Journal of the European Patent Office, No. 12/82